# EUROPÄISCHE PATENTSCHRIFT

(11) **EP 3 062 026 B1**
(45) Veröffentlichungstag und Bekanntmachung des Hinweises auf die Patenterteilung: **12.06.2019**
(21) Anmeldenummer: 16157224.3
(22) Anmeldetag: 24.02.2016
(51) Int. Cl.: F24D 19/10, F24D 3/12, F24D 13/02, G05D 23/19, H04L 12/28, H04L 12/64

(54) **TEMPERATURREGELUNGSSYSTEM**
TEMPERATURE CONTROL SYSTEM
SYSTEME DE REGULATION DE LA TEMPERATURE

(30) Priorität: 25.02.2015 DE 202015100899 U; 06.07.2015 DE 202015103564 U
(43) Veröffentlichungstag der Anmeldung: 31.08.2016
(73) Patentinhaber: Xpertec GmbH, 87700 Memmingen (DE)
(72) Erfinder: Suic, Ersin, 87700 Memmingen (DE); Suic, Orhan, 87700 Memmingen (DE)
(74) Vertreter: Pfister & Pfister Patent- und Rechtsanwälte

(56) Entgegenhaltungen:
- EP-A1- 2 704 367
- WO-A1-99/22284
- WO-A1-2010/135372
- WO-A1-2013/020970
- WO-A1-2013/103804
- GB-A- 2 492 146
- US-A1- 2014 277 817

## Beschreibung

Die Erfindung betrifft ein Temperaturregelsystem umfassend ein Steuergerät und eine oder mehrere Regeleinheiten, wobei die Regeleinheiten über das Steuergerät wahlweise ansteuerbar sind und eine Wärmequelle regeln.

Die optimale Temperaturregelung in Gebäuden wird aus Gründen des Umweltschutzes sowie der Kostenreduzierung beim Heizen immer wichtiger. Gleichzeitig besteht der Bedarf nach individuell angepasster, genau nach dem persönlichen Wohlbefinden ausgerichteter Temperaturregelung. Kostenreduktion soll somit nicht als unangenehmer Verzicht auf Luxus sondern mit Komfortempfinden kombiniert werden.

In vielen Gebäuden existieren mehrere unterschiedliche Arten von Wärmequellen, die alle Einfluss auf die Raumtemperaturen haben. Eine wichtige Anforderung an ein modernes Temperaturregelungssystem ist somit die, dass von einem Regelsystem alle diese unterschiedlichen Wärmequellen beeinflusst und geregelt werden können. Diese Anforderung wird zusätzlich dadurch verschärft, dass neben den verschiedenen Arten von Wärmequellen (beispielsweise Heizkörper, Fußbodenheizung, Wandheizungen,...) oftmals auch verschiedene Technologien aus unterschiedlichen Modernisierungsstufen des Gebäudes nebeneinander vorliegen. Dies tritt beispielsweise bei Altbauten auf, die aus Kostengründen nur teilweise renoviert wurden. Ein modernes Temperaturregelungssystem muss daher auch mit unterschiedlichen Evolutionsstufen von Wärmequellen umgehen können.

Der Stand der Technik liefert verschiedene Lösungen für eine Temperaturregelung in Gebäuden. So existieren beispielsweise Zeitschaltuhren, die anstelle bisher üblicher Thermostate an Heizkörpern angebracht werden können und dann die Wärmeabgabe auf Basis von hinterlegten Schaltzeiten regeln. Nachteilig an einer solchen Lösung ist die aufwändige manuelle und individuelle Anpassbarkeit der Temperaturen sowie die kaum vorhandene Möglichkeit, mit solchen Thermostaten alle unterschiedlichen Wärmequellen zu regeln.

Darüber hinaus sind Systeme bekannt, die über ein zentrales Steuergerät mehrere Stelleinrichtungen auch unterschiedlicher Wärmequellen ansteuern können. Die Steuergeräte solcher Systeme sind in der Nähe einer zentralen Heizungssteuerung angebracht und wirken somit auch nur zentral auf die angeschlossenen Wärmequellen ein. Die Integration weiterer Wärmequellen, die nicht zur Ausbaustufe dieses zentralen Systems gehören ist dabei meist nicht möglich. Solche weiteren Wärmequellen, die nicht zur zentralen Installation gehören, sind beispielsweise nachgerüstete Heizkörper in nachträglich ausgebauten Räumen oder aber auch Heizkörper, die mit einer alternativen Wärmeversorgung, wie beispielsweise aus Solarthermie, gespeist werden. Dabei offenbaren die internationale Patentanmeldungen WO 2013/020970 A1, WO 99/22284 A1 und WO 2010/135372 A1 Lösungen mit den Merkmalen des Oberbegriffs des Anspruchs 1. Die Patentanmeldung WO 99/22284 A1 bildet den nächstliegenden Stand der Technik, da diese ein Temperaturregelsystem beschreibt, bei dem auch die umgesetzte Energiemenge an Wärmequellen bestimmt wird.

Aufgabe der vorliegenden Erfindung ist es daher, ein Temperaturregelungssystem vorzuschlagen, das die Temperatur durch Beeinflussung unterschiedlicher Wärmequellen regelt und komfortable Bedienmöglichkeiten von innerhalb aber auch von außerhalb des Gebäudes bereit stellt und wobei gleichzeitig die umgesetzte Wärmemenge, die für die Berechnung der anfallenden Heizkosten benötigt wird, ermittelt werden kann.

Diese Aufgabe wird gelöst durch ein Temperaturregelungssystem nach Anspruch 1.

Das erfindungsgemäße Temperaturregelungssystem umfasst ein Steuergerät, welches mit allen zum Einsatz kommenden Regeleinheiten kommuniziert. Dieses Steuergerät bildet eine Art Kommunikationsmittelpunkt des Temperaturregelungssystems und kann mit den Regeleinheiten Daten und Informationen in beiden Richtungen, d.h. vom Steuergerät zu den Regeleinheiten und von den Regeleinheiten zum Steuergerät austauschen. Weiterhin weist dieses Steuergerät auch Schnittstellen zur Kommunikation mit Geräten außerhalb des Gebäudes auf. Eine derartige Schnittstelle nach außen könnte beispielsweise eine Internet- oder Funkverbindung sein. Das Steuergerät enthält einen Datenspeicher und einen Programmspeicher und steuert die Koordination der Temperaturregelung in einem Gebäude, indem entsprechende Daten und Informationen aktiv übertragen werden und die Zusammenarbeit der einzelnen Regeleinheiten überwacht wird. Diese Regeleinheiten sind im gesamten Gebäude verteilt und regeln jeweils die Wärmeabgabe einer Wärmequelle. Unter Regelung ist hier zu verstehen, dass die Ist-Temperatur von jeder Regeleinheit selbst ermittelt wird, diese Ist-Temperatur dann mit einem hinterlegten Sollwert für die Temperatur verglichen wird und anschließend, basierend auf dem Vergleich dieser beiden Temperaturwerte, die Wärmeabgabe der entsprechenden Wärmequelle von der Regeleinheit aktiv beeinflusst, d.h. erhöht oder abgesenkt wird. Dabei können in Verbindung mit dem Steuergerät sowohl verschiedenartige als auch gleiche Regeleinheiten zum Einsatz kommen. Unter gleichen Regeleinheiten sind beispielsweise Heizkörperthermostate gleicher Bauart zu verstehen, die identisch aufgebaut sind aber an unterschiedlichen Heizkörpern angebracht werden. Es können aber auch parallel verschiedenartig ausgebildete Regeleinheiten im erfindungsgemäßen Temperaturregelungssystem verwendet werden, beispielsweise Regeleinheiten für Heizkörper in Kombination mit Regeleinheiten für Fußbodenheizungen oder in Kombination mit Regeleinheiten für Wasserpumpen, die das Heizmedium im Gebäude verteilen. Erfindungsgemäß sind hier alle nur erdenklichen Kombinationen aus verschiedenen Regeleinheiten vorgesehen. Es besteht dabei immer die Möglichkeit der Kommunikation des Steuergerätes mit diesen gleichen oder verschiedenartigen Regeleinheiten. Durch die Kommunikation mit dem Steuergerät können beispielsweise auch unterschiedliche, den einzelnen Wärmequellen individuell zugeordnete Sollwerte für die Temperaturregelung vom Steuergerät zu den einzelnen Regeleinheiten übertragen werden. Andersherum können selbstverständlich auch Ist-Werte von den einzelnen Regeleinheiten zum Steuergerät übermittelt werden. Die Regeleinheiten sind von dem Steuergerät wahlweise ansteuerbar. Das bedeutet, dass die Regeleinheiten auch ohne Kommunikation mit dem Steuergerät ihre Regelaufgabe erfüllen können. Fällt beispielsweise die Kommunikation zwischen Steuergerät und Regeleinheiten aufgrund einer Störung des Kommunikationssystems aus, können die Regeleinheiten weiterhin aktiv die Temperatur in ihrem Bereich regeln, ohne von einem Datentransfer mit dem Steuergerät abhängig zu sein. Es ist erfindungsgemäß selbstverständlich auch möglich, dass das Steuergerät nur einige aber nicht alle im Gebäude verbauten Regeleinheiten ansteuert. So kann es sinnvoll sein, bestimmte Räume vom Zugriff des Steuergerätes auszuschließen, beispielsweise wenn in Meß- oder Laborräumen immer eine genau konstante Temperatur eingehalten werden muss und versehentliche Fehlbedienungen bei der Temperaturregelung ausgeschlossen werden sollen.

Die Regeleinheiten des erfindungsgemäßen Temperaturregelungssystems regeln die entsprechenden Wärmequellen mittelbar oder unmittelbar. Das bedeutet, dass die entsprechende Regeleinheit zum einen direkt auf die Wärmeabgabe der entsprechenden Wärmequelle Einfluss nehmen kann. Dies ist beispielsweise bei Heizungsthermostaten der Fall, wenn die Wärmemenge durch Stellen eines Ventils, welches den Durchfluss des Heizmediums regelt, beeinflusst wird. Zum anderen ist auch eine mittelbare Regelung der Wärmequelle möglich. Das bedeutet dass die Regeleinheiten zunächst eine andere Einheit regelt und diese andere Einheit dann Einfluss auf die Temperaturregelung nimmt. Dies ist beispielsweise bei der Regelung einer Umwälzpumpe der Fall, die mehrere Räume mit Heizmedium versorgt. Die Regeleinheit für die Umwälzpumpe regelt hier die Raumtemperatur nicht direkt sondern nimmt mittelbar Einfluss auf die Temperaturregelung in mehreren Räumen.

Bei einer bevorzugten Ausgestaltung des Vorschlags ist vorgesehen, dass als Wärmequelle ein Radiator-Heizkörper, eine Fußbodenheizung, ein Therme oder ein Heizkessel vorgesehen ist. Es sind Regeleinheiten vorgesehen, die die Regelung unterschiedlichster Wärmequellen ermöglichen. Eine sehr gebräuchliche Wärmequelle ist dabei ein Radiator-Heizkörper. Entsprechende Regeleinheiten können beispielsweise anstelle der gebräuchlichen, mechanischen Thermostate am Heizkörper angebracht werden. Weiterhin können Regeleinheiten in ähnlicher Weise eine Fußbodenheizung, eine Therme oder einen Heizkessel regeln. Bei der Regelung einer Therme oder eines Heizkessels beeinflusst die entsprechende Regeleinheit andere physikalische Größen als bei der Regelung eines Heizkörpers. Bei der Regelung von Heizkessel oder Therme wird beispielsweise die Temperatur des Heizmediums beeinflusst, wogegen bei der Regelung eines Heizkörpers die Durchflussmenge dieses Heizmediums geregelt wird.

Des Weiteren ist günstiger Weise vorgesehen, dass die Regeleinheit über eine Schnittstelle mit der Wärmequelle verbunden ist. In dieser Ausführungsform regelt die Regeleinheit die Wärmequelle nicht direkt. Die Regelung erfolgt vielmehr mittels einer zwischengeschalteten Schnittstelle. Dies ist beispielsweise bei der Regelung eine Umwälzpumpe für Heizmedium der Fall. Die Regeleinheiten kommuniziert hier mit einem Controller für die Pumpe. Die Regeleinheit übergibt beispielsweise einen Sollwert für eine bestimmte Durchflussmenge, der Controller steuert dann in Funktion einer Schnittstelle die Pumpenlaufzeit bzw. die Pumpendrehzahl.

Geschickter Weise ist vorgesehen, dass die Regeleinheit mittelbar oder unmittelbar auf einen Stellantrieb eines Heizungs- oder Thermostatventils wirkt. In dieser Ausführungsform regelt die Regeleinheit die Wärmequelle dadurch, dass die Durchflussmenge an Heizmedium durch einen Ventil beeinflusst wird. Dabei wird auf den Stellantrieb dieses Ventils eingewirkt. Diese Einwirkung kann entweder unmittelbar durch Ansteuerung eines Stellmotors erfolgen oder aber mittelbar über einen zwischengeschalteten Controller zwischen Regeleinheiten und Stellantrieb.

In einer weiteren bevorzugten Ausführungsform ist vorgesehen, dass die Regeleinheit die Wärmeabgabe der Fußbodenheizung regelt, insbesondere wobei die Regeleinheit derart ausgebildet ist, dass sie jeweils mindestens einen Stellmotor eines Ventils, welches den Warmwasserfluss durch Heizschlaufen der Fußbodenheizung, bevorzugt dezentral jeweils über eine Kabel- und/oder Funkverbindung regelt. Es ist hier eine Regeleinheit vorgesehen, die die Wärmeabgabe einer Fußbodenheizung dadurch regelt, dass Einfluss auf ein Ventil genommen wird. Durch dieses Ventil fließt das Heizmedium, meist Warmwasser; die Durchflussmenge dieses Heizmediums bestimmt dann die Wärmeabgabe dieser Wärmequelle. Es sind dafür spezielle Regeleinheiten vorgesehen, die direkt auf den Stellmotor eines solchen Ventils einwirken. Eine derartige Lösung ist besonders günstig bei Installationen, bei denen sich Ventil und Stellmotor für die Regelung des Durchflusses durch eine im Raum befindliche Heizschlaufe ebenfalls in demselben Raum befinden. Die Regeleinheit regelt somit dezentral und mit kurzer zu überbrückender Entfernung direkt die fließende Menge des Heizmediums. Die Ansteuerung des Stellmotors kann dabei sowohl über eine Kabel- als auch eine Funkverbindung erfolgen. Besonders günstig können derartige Regeleinheiten in Gebäuden eingesetzt werden, die mit Fußbodenheizungen und einfachen, älteren elektronischen Reglern für deren Ventile ausgestattet sind und mit einem neuen Temperaturregelungssystem ausgestattet werden sollen. Der Austausch der älteren Regeleinheit mit einer neuen Regeleinheit nach einer Ausführungsform des erfindungsgemäßen Temperaturregelung Systems ist hier besonders einfach, da beim Wechsel nur die Kabelverbindung des alten Thermostates zum Stellmotor des Ventils an die neue Regeleinheiten an geklemmt werden muss. Weitere Installationen sind nicht notwendig. Besonders günstig ist es hier, wenn die neue Regeleinheit gemäß einer Ausführungsform der Erfindung so dimensioniert ist, dass sie genau in den Bauraum der alten, zu ersetzenden Regeleinheiten passt. In diesem Fall entfällt bei der Installation sogar der Aufwand für die Befestigung der neuen Regeleinheit.

Des Weiteren ist vorgesehen, dass eine Stromversorgung der Regeleinheiten wahlweise über wenigstens eine in der Regeleinheit angeordnete Batterie oder über einen Anschluss der Regeleinheit an ein Stromnetz vorgesehen ist. Eine Stromversorgung über eine in der Regeleinheit angeordnete Batterie erspart den Aufwand für den Anschluss an eine zentrale Energieversorgung. Dazu stellt die Stromversorgung über eine Batterie sicher, dass eine Funktion der Regeleinheit auch bei Ausfall des Stromnetzes möglich ist. In anderen Situationen kann sich allerdings auch eine Stromversorgung über einen Anschluss ans Stromnetz als günstiger herausstellen. So kann es hier beispielsweise nicht passieren, dass die Regeleinheit aufgrund einer leer gewordenen Batterie nicht mehr funktioniert. Es ist daher jeweils individuell abzuwägen welche Stromversorgung besser geeignet ist, zur Erfindung gehören jedenfalls beide Möglichkeiten der Stromversorgung.

Geschickter Weise ist vorgesehen, dass die Regeleinheit als Mehrfachregeleinheit ausgebildet ist. In dieser Ausführungsform sind mehrere Regeleinheiten baulich zu einer Mehrfachregeleinheit kombiniert. Eine derartige Ausgestaltung erlaubt die Regelung mehrerer räumlich benachbarter Wärmequellen mit dem Vorteil, dass nur eine Mehrfachregeleinheit installiert und montiert werden muss. Die Einzelregeleinheiten in einer derartigen Mehrfachregeleinheit sind auch bei dieser Lösung in der Lage einzelne Wärmequellen individuell zu regeln.

Des Weiteren ist günstiger Weise vorgesehen, dass die Regeleinheit ausgebildet ist, um per Funk mit einer insbesondere räumlich getrennt vorgesehenen Funkleiste zu kommunizieren und die Funkleiste zur Temperaturregelung über zentral angeordnete Stellantriebe von Ventilen die Wärmequelle und/oder einen Heizkessel und/oder eine Heizungspumpe steuert. In dieser Ausführungsform des Temperaturregelungssystems befindet sich die Regeleinheit, die die Ist-Temperatur ermittelt, die Ist-Temperatur mit einem Sollwert vergleicht und, basierend auf der Differenz zwischen diesen beiden Werten, eine passende Stellgröße ermittelt räumlich getrennt vom Wirkungsort dieser Stellgröße. Die Regeleinheit befindet sich in dem Raum, dessen Temperatur geregelt werden soll. Der Wirkungsort für die von der Regeleinheit bestimmten Stellgröße befindet sich aber räumlich entfernt, beispielsweise im Keller. Die Regeleinheit überträgt daher die Stellgröße per Funk an eine entfernte Funkleiste, die dann wiederum Einfluss auf die zu regelnde Wärmequelle nimmt. Wie diese Funkleiste Einfluss auf die Wärmequelle nimmt, kann wiederum auf verschiedene Arten erfolgen. So ist es beispielsweise möglich, dass die Funkleiste zentral angeordnete Stellantriebe von Ventilen ansteuert, wobei diese Ventile wiederum den Durchfluss von Heizmedium in den entsprechenden Raum steuern. Weiterhin ist es aber auch möglich, dass die Funkleiste zusätzlich oder alternativ einen Heizkessel oder eine Heizungs- oder Umwälzpumpe steuert. Im Fall der Steuerung eines solchen Kessels oder einer Pumpe nimmt die Funkleiste dann Einfluss auf Kesseltemperatur und nicht wie bei der Ansteuerung eines Heizungsventils auf die Menge des durchgeflossenen Heizmediums.

Des Weiteren ist günstiger Weise vorgesehen, dass die Regeleinheit über eine Funkverbindung mit dem insbesondere zentral angeordneten Steuergerät und/oder der Funkleiste kommuniziert. Die Verwendung einer Funkverbindung für die Kommunikation zwischen den Regeleinheiten und dem Steuergerät sowie einer möglicherweise vorhandenen Funkleiste hat den Vorteil, dass keine Leitungen für diese Kommunikation verlegt werden müssen. Dies ist besonders interessant, wenn ein Altbau mit einem neuen Temperaturregelungssystem nachgerüstet werden soll. Selbstverständlich gehört zur Erfindung aber auch die klassische Verbindung und Kommunikation der Geräte untereinander über Kabel.

Bei einer bevorzugten Ausgestaltung des Vorschlags ist vorgesehen, dass die Regeleinheit als Zentralregeleinheit ausgebildet ist. Durch diese Ausgestaltung als Zentralregeleinheit, die zentral im Gebäude angeordnet ist, wird das Temperaturregelungssystem besonders einfach gehalten. Die Zentralregeleinheit ermöglicht die Regelung mehrerer Wärmequellen, die sich in der Nähe voneinander befinden. Gleichzeitig entsteht nur der Aufwand für die Installation dieser einen Zentralregeleinheit. Diese erfindungsgemäße Ausführungsform ist besonders für kleine Gebäude oder Einheiten, bei denen keine große Distanz zwischen den zu regelnden Wärmequellen vorliegt, geeignet. Ebenfalls möglich wird eine geschoßweise Temperaturregelung.

Des Weiteren ist in dem Vorschlag vorteilhafter Weise vorgesehen, dass die Regeleinheit als Funkleiste ausgebildet ist und wenigstens einen Stellantrieb eines Ventils, das räumlich getrennt von der Funkleiste vorgesehen ist insbesondere über eine Funk- und/oder Kabelverbindung direkt ansteuert, und/oder über die Funkleiste eine Wasserpumpe einer Fußbodenheizung und/oder über die Funkleiste eine Kesseltemperatur einer zentralen Heizungseinheit steuerbar ist. Durch diese Ausbildung einer Regeleinheit als Funkleiste wird es ermöglicht, verschiedene Arten von Wärmequellen über eine einzige Regeleinheit anzusteuern. Die Regeleinheit/Funkleiste steuert dabei mindestens einen Stellantrieb eines Ventils, welches baulich von der Regeleinheit/Funkleiste getrennt ist, direkt an. Dieses Ventil kann dabei beispielsweise dazu dienen den Durchfluss an Heizmedium durch eine Heizschlange für eine Fußbodenheizung zu regeln. Selbstverständlich können von der Funkleiste auch andere Stellantriebe von Ventilen angesteuert werden. Die Ansteuerung des Stellantriebs kann dabei über eine Kabel- oder auch eine Funkverbindung erfolgen. Mithilfe einer solchen als Funkleiste ausgebildeten Regeleinheit ist es auch möglich, gleichzeitig eine Wasserpumpe (Umwälzpumpe) einer Fußbodenheizung anzusteuern. Darüber hinaus kann zusätzlich von der Regeleinheit/Funkleiste die Kesseltemperatur einer zentralen Heizungsanlage angesteuert werden.

Geschickter Weise ist vorgesehen, dass die Regeleinheit als Thermen- oder Kesselregeleinheit ausgebildet ist. In dieser Ausführung regelt die Regeleinheit die Temperatur eines zentralen Speichers für Heizmedium, wie beispielsweise den Kesselinhalt einer Zentralheizung. Selbstverständlich kann eine derartige Regeleinheit auch so ausgeführt sein, dass zusätzlich oder alternativ zur Temperaturregelung Einfluss auf eine Wasserpumpe (Umwälzpumpe) oder einen oder mehrere Stellantrieb von Ventilen genommen wird.

Des Weiteren ist günstiger Weise vorgesehen, dass die Regeleinheit einem Warmwasserbereiter zugeordnet ist, und die Regeleinheit für die Regelung der Temperatur des Warmwasser-Brauchwassers vorgesehen ist. In dieser Ausführungsform ist das Einsatzgebiet der Temperaturregelung nochmals erweitert. Es ist hier eine Regeleinheit vorgesehen, die als Wärmequelle einen Warmwasserbereiter regelt. Durch diese Regelung wird dann nicht die Raumtemperatur im Gebäude beeinflusst sondern die Temperatur des Warmwasser-Brauchwassers. Dabei kommen dieser Warmwasseraufbereitung sämtliche Vorteile des erfindungsgemäßen Temperaturregelungssystems zugute. So ist es beispielsweise möglich auch die Temperatur des Warmwasser-Brauchwassers über Zuführung von Energie mehrerer Wärmequellen zu regeln. Dies ist beispielsweise interessant, wenn neben einer Brauchwasserbereitung auf der Basis von fossilen Brennstoffen zusätzlich eine Solarthermie auf dem Dach vorhanden ist. Weiterhin kann in dieser Ausführungsform auch über diverse Eingabeelemente innerhalb und außerhalb des Gebäudes Einfluss auf die Temperatur des Warmwasser-Brauchwassers genommen werden. Durch die Anwendung der Vorteile des Temperaturregelung Systems auf die Warmwasserbereitung kann auch in diesem wichtigen Bereich eines jeden Gebäudes Energie eingespart werden und gleichzeitig der Wohnkomfort deutlich erhöht werden.

Des Weiteren ist vorgesehen, dass mehrere, auch unterschiedlich ausgebildete, insbesondere wie zuvor definierte, Regeleinheiten vorgesehen sind und die Regeleinheiten unabhängig voneinander und/oder wahlweise direkt oder über das Steuergerät ansteuerbar und/oder bedienbar sind. Eine mögliche Ausführungsform des erfindungsgemäßen Temperaturregelungssystems ermöglicht das Zusammenspiel verschiedenster Regeleinheiten untereinander sowie mit dem Steuergerät. Dabei können alle Regeleinheiten immer auch direkt und manuell angesteuert bzw. bedient werden. Diese direkte und manuelle Ansteuerung ist an jeder Regeleinheiten unabhängig von den anderen Regeleinheiten möglich. So kann ein Nutzer des Temperaturregelungssystems die Raumtemperatur in einem Raum nach seinem persönlichen Wohlbefinden jederzeit auch extrem abweichend von den anderen Raumtemperaturen einstellen. Neben dieser direkten Ansteuerbarkeit der Regeleinheiten sind alle Regeleinheiten aber auch über das Steuergerät ansteuerbar oder bedienbar. Somit wird es beispielsweise ermöglicht vom Steuergerät aus die Temperaturen in verschiedenen Räumen zu regeln, ohne sich dorthin begeben zu müssen. Ist am Steuergerät auch eine Schnittstelle nach außerhalb vorgesehen, kann die Einstellung der Raumtemperatur sogar von außerhalb des Gebäudes und/oder z.B. über ein mobiles Gerät erfolgen. Das erfindungsgemäße Temperaturregelungssystem verbindet somit die Vorteile einer schnellen, unkomplizierten, direkten Temperaturregelung mit der einer automatisierten und aus der Entfernung beeinflussbaren Temperaturregelung. Die Erfindung vereint somit alle Vorteile verschiedener Methoden der Temperaturregelung in Gebäuden.

Vorteilhafter Weise ist vorgesehen, dass die Regeleinheiten die Temperatur jeweils eigenständig regeln. Durch eine eigenständige Regelung jeder Wärmequelle durch die entsprechende Regeleinheit wird sichergestellt, dass auch bei Ausfall oder Störung des Steuergerätes weiterhin die Raumtemperatur automatisch und zuverlässig geregelt wird. Darüber hinaus führt der Ausfall einer einzelnen Regeleinheit auch nur zum Ausfall der Regelung für eine Wärmequelle, die anderen Regeleinheiten und Wärmequellen sind davon völlig unabhängig.

In einer vorteilhaften Ausgestaltung ist vorgesehen, dass die Regeleinheit oder das Steuergerät über einen Router mit dem Internet verbunden ist. Durch eine derartige Verbindung mit dem Internet wird eine Kommunikation mit der Regeleinheit und/oder dem Steuergerät von außerhalb des Gebäudes oder über eine Internetverbindung ermöglicht. Dadurch ergeben sich vielfältige Möglichkeiten der Bedienung und Steuerung des erfindungsgemäßen Temperaturregelungssystems. So ist es beispielsweise möglich neue Sollwerte für die Temperaturregelung von außerhalb des Gebäudes oder über das Internet auf das Temperaturregelungssystem zu übertragen und umgekehrt Ist-Werte von jedem Ort über Internet aus abzurufen.

Geschickter Weise ist vorgesehen, dass mindestens ein Dateneingabe- und/oder Ausgabegerät, insbesondere ein PC, Mobil-PC, Smartphone oder Tablet-PC vorgesehen ist, welches eine insbesondere graphische Benutzeroberfläche zur Verfügung stellt, über die Parameter einer Temperaturregelung, wie beispielsweise die Solltemperatur in einzelnen oder mehreren Räumen eines Gebäudes, Temperatur- oder Heizprofile etc. einstellbar und veränderbar sind und das Dateneingabe- und/oder Ausgabegerät für eine Übertragung der eingestellten Parameter via Datenfernübertragung, insbesondere über eine kabelgebundene Verbindung oder eine kabellose Internet-, Funk- oder NFC-Verbindung zu dem Steuergerät ausgebildet ist. Durch ein derartiges Dateneingabe- und/oder Ausgabegerät wird der Vorteil geschaffen, von nahezu jedem beliebigen Ort aus Einfluss auf das Temperaturregelungssystem zu nehmen. Aktuell rückt gerade das Smartphone in immer weitere Bereiche des täglichen Lebens vor. Der Smartphone-Benutzer ist bereits gewohnt, sämtliche persönliche Kommunikation über dieses Gerät durchzuführen. So ist es besonders vorteilhaft, dass auch über ein Smartphone mit dem erfindungsgemäßen Temperaturregelungssystem kommuniziert werden kann. Dadurch eröffnet sich die Möglichkeit, über ein vertrautes Kommunikationsmedium die Ist-Temperaturen im Gebäude beispielsweise auch von außerhalb zu prüfen und bei Bedarf anzupassen. Dies ist besonders bei längeren Reisen des Besitzers des Gebäudes nützlich, da bei Abwesenheit Energiekosten durch abgesenkte Raumtemperaturen eingespart werden können. Gleichzeitig können vor der Wiederankunft zu Hause rechtzeitig die Temperaturen im Gebäude oder in einzelnen Räumen wieder über die Fernbedienung via Smartphone erhöht werden, so dass bei Ankunft komfortable Wohnbedingungen vorliegen. Neben dieser direkten Vorgabe von Sollwerten für die Temperatur mittels eines Dateneingabe- und/oder Ausgabegeräts ist es auch möglich Heizprofile von außerhalb des Gebäudes zu erstellen oder anzupassen. Unter Heizprofil ist hier ein zeitabhängiges Heizverhalten zu verstehen, bei dem beispielsweise die Raumtemperatur tagsüber höher eingestellt wird als nachts. Besonders günstig für eine derartige Anpassung von Werten und Profilen ist eine grafische Benutzeroberfläche, durch die die Bedienung besonders einfach und ergonomisch gestaltet werden kann. Als Dateneingabe- und/oder Ausgabegeräte sind neben dem Smartphone selbstverständlich auch andere Geräte geeignet, wie beispielsweise PCs, mobile PCs, Tablets oder PDAs. Zur Kommunikation des Dateneingabe- und/oder Ausgabegeräts mit dem Steuergerät eignen sich zum einen kabelgebundene Internet- oder sonstige Netzwerkverbindungen oder auch kabellose Verbindungen wie kabelloses Internet, Funk, WLAN, NFC oder Ähnliches.

Vorteilhafter Weise ist vorgesehen, dass über die Benutzeroberfläche die aktuelle Ist-Temperaturen in den einzelnen oder mehreren Räumen des Gebäudes anzeigbar ist, wobei die Regeleinheiten ausgebildet sind, um dafür benötigte Messwerte an das zentrale Steuergerät und/oder unmittelbar an das Dateneingabe- und/oder Ausgabegerät zu übertragen, wobei die Übertragung insbesondere über eine kabelgebundene Verbindung oder eine kabellose Internet-, Funk- oder NFC-Verbindung vorgesehen ist. Wie bereits beschrieben, ist es sehr vorteilhaft, wenn aktuelle Ist-Temperaturen auf der grafischen Benutzeroberfläche eines zum Temperaturregelungssystem gehörenden Dateneingabe- und/oder Ausgabegerät angezeigt werden können. Dazu sind die Regeleinheiten so ausgebildet, dass sie die in den entsprechenden Räumen ermittelten Temperaturmesswerte entweder zunächst zum Steuergerät und dann zum Dateneingabe- und/oder Ausgabegerät oder direkt zu diesem übertragen können. Auch für diese Übertragung eignet sich eine Vielzahl kabelgebundener oder kabelloser Kommunikationstechniken.

Geschickter Weise ist vorgesehen, dass mindestens zwei Zustände der Benutzeroberfläche auswählbar sind und ein erster Zustand oder ein zweiter Zustand vom Bediener der Benutzeroberfläche bestimmt wird, wobei die Bedienoberfläche im ersten Zustand zumindest einen Wechsel zwischen verschiedenen Temperatur- und Heizprofilen, eine Änderung von Solltemperaturen und Schaltzeiten und/oder das An- und Abschalten von Sensoren ermöglicht und wobei die Bedienoberfläche im zweiten Zustand zumindest eine Änderung von Solltemperaturen und Schaltzeiten und/oder das An- und Abschalten von Sensoren ermöglicht und über die Benutzeroberfläche ein Zugriff auf das Temperaturregelungssystem jederzeit möglich ist. In dieser Ausführungsform sind mindestens zwei Zustände der Benutzeroberfläche auswählbar. Besonders günstig haben sich dabei die zwei Zustände Manuell und Auto erwiesen. Zur Erfindung gehörend sind allerdings auch weitere Zustände der Benutzeroberfläche möglich. Der Zustand Manuell der Benutzeroberfläche ermöglicht dabei verschiedene Aktionen zur Beeinflussung des Temperaturregelungssystems. Zum einen kann im Zustand Manuell ein direkter Wechsel von unterschiedlichen Temperatur- oder Heizprofilen herbeigeführt werden. Bei diesem direkten Wechsel der Profile wird dann bei der Regelung der Temperatur auf bereits hinterlegte Sollwerte im Temperaturregelungssystem zurückgegriffen. Darüber hinaus ist auch eine Veränderung dieser hinterlegten Solltemperaturen im Zustand Manuell möglich. Weiterhin besteht in diesem Zustand die Möglichkeit Schaltzeiten zu verändern, bei zu denen zwischen unterschiedlichen Temperatur- oder Heizprofilen gewechselt wird. Es ist ebenfalls möglich im Zustand Manuell Sensoren, die zu den Regeleinheiten gehören, über die Benutzeroberfläche an- bzw. abzuschalten. Solche Sensoren können beispielsweise Bewegungssensoren oder Lichtsensoren sein. Eine Abschaltbarkeit von Sensoren hat sich als besonders günstig herausgestellt, wenn klar ist, dass eine längere, konstante Temperaturregelung durch das Temperaturregelungssystem in einem Raum erfolgen soll. Das Abschalten der Sensoren schließt in so einem Fall eine ungewollte Veränderung der Temperaturregelung durch unerwünschte Sensorsignale aus. Die Benutzeroberfläche kann auch den Zustand Auto annehmen. Die Auswahl des anliegenden Zustandes der Benutzeroberfläche erfolgt dabei durch den Bediener. Im Zustand Auto ist kein direkter Wechsel zwischen verschiedenen Temperatur- und Heizprofilen möglich, die Temperaturregelung erfolgt automatisch und selbständig durch das Temperaturregelungssystem. Allerdings ist eine Veränderung der Solltemperaturen innerhalb verschiedener Temperatur- und Heizprofile im Zustand Auto der Benutzeroberfläche möglich. Weiterhin können die Schaltzeiten für den Wechsel zwischen verschiedenen Temperatur- und Heizprofilen verändert werden. Darüber hinaus ist auch im Zustand Auto ein An- und Abschalten von Sensoren der Regeleinheiten möglich.

Des Weiteren ist vorgesehen, dass das Steuergerät für die gleichzeitige Kommunikation mit gleichen und/oder verschiedenartig ausgebildeten Regeleinheiten vorgesehen ist. Das Steuergerät ist so ausgebildet, dass es bei der Temperaturregelung gleichzeitig mit allen im System befindlichen Regeleinheiten kommunizieren kann. Dabei können diese Regeleinheiten sowohl gleicher als auch unterschiedlicher Bauart sein.

In einer vorteilhaften Ausgestaltung ist vorgesehen, dass eine manuelle Eingabe der Parameter der Temperaturregelung an den Regeleinheiten und/oder dem Steuergerät vorgesehen ist. Eine derartige manuelle Eingabemöglichkeit ist immer dann besonders vorteilhaft, wenn spontan und schnell eine Temperaturänderung gewünscht ist. Durch eine Eingabemöglichkeit direkt an den Regeleinheiten kann eine derartige spontane Temperaturänderung direkt im betreffenden Raum ausgelöst werden. Dies kann beispielsweise über Tastenbedienelemente an den entsprechenden Regeleinheiten erfolgen. Weiterhin ist eine Bedienmöglichkeit direkt an dem Steuergerät sinnvoll, bei der dann von einem Ort aus gleichzeitig auf alle Räume Einfluss genommen werden kann. Weitere Vorteile bietet diese manuelle Eingabemöglichkeit im Falle einer Störung der Kommunikationswege entweder von außerhalb ins Innere des Gebäudes oder zwischen dem Steuergerät und den Regeleinheiten. Über manuelle Eingabemöglichkeiten sind die Raumtemperaturen zu jeder Zeit anpassbar.

Bei einer bevorzugten Ausgestaltung des Vorschlags ist vorgesehen, dass eine im Steuergerät und/oder den einzelnen Regeleinheiten vorgesehene Uhr- und Kalenderfunktion zur automatischen Anpassung der Parameter der Temperaturregelung in Abhängigkeit von Tages-Wochen-, Monats- und/oder Jahreszeit vorgesehen ist. Eine derartige Uhr- und Kalenderfunktion eröffnet weitere Möglichkeiten der automatischen Temperaturregelung in einem erfindungsgemäßen Temperaturregelungssystem. Es wird dadurch möglich, beispielsweise die Solltemperaturen bei Nacht abzusenken, da zu dieser Zeit keine Personen aktiv sind und keinen Mehrwert komfortablen Raumtemperaturen haben. Andererseits ist es möglich die Temperatur am Morgen automatisch wieder zu erhöhen, wenn die in der Nacht ruhenden Personen tagsüber wieder aktiv werden und sich in den Räumen des Gebäudes bewegen. Eine Kalenderfunktion hat dann noch den Vorteil, dass bei der Temperaturregelung auch noch zwischen den Wochentagen unterschieden werden kann. So ist es beispielsweise in Bürogebäuden sinnvoll die Temperaturen während der Arbeitswoche höher zu halten und am Wochenende, wenn die Büros nicht besetzt sind, die Temperatur deutlich abzusenken um Kosten einzusparen.

Vorteilhafter Weise ist vorgesehen, dass das Steuergerät und/oder die Regeleinheiten ausgebildet sind, die Sollwerte für die Temperaturregelung in Zeiten nicht aktiver Bewohner eines Gebäudes temporär abzusenken, in Zeiten aktiver Bewohner temporär zu erhöhen und in Zeiten dauerhafter Abwesenheit der Bewohner die Sollwerte für die Regelung der Temperatur dauerhaft abzusenken. Diese Funktionen werden im Wesentlichen von der bereits beschriebenen Uhr- und Kalenderfunktion realisiert. Neben unterschiedlichen Solltemperaturen für die Temperaturregelung bei temporärer Abwesenheit der Bewohner ist es auch besonders günstig, die Temperatur bei längerer Abwesenheit dauerhaft abzusenken. Dies ist gerade bei Urlaubsreisen vorteilhaft. Erfindungsgemäß ist es selbstverständlich trotz dieser Funktion immer möglich manuell oder auch per Fernbedienung durch ein Dateneingabe- und/oder Ausgabegerät in die Temperaturregelung einzugreifen und bei Bedarf die Vorgaben der Uhr- und Kalenderfunktion abzuändernden. Durch die Vorgaben der Uhr- und Kalenderfunktion ist es allerdings stets sichergestellt, dass überhaupt eine automatische Temperaturanpassung erfolgt, auch wenn die Bedienung über das Dateneingabe- und/oder Ausgabegerät vergessen wird oder aufgrund einer Störung nicht möglich ist.

Geschickter Weise ist vorgesehen, dass wahlweise eine manuelle Eingabe der Parameter der Temperaturregelung an der Regeleinheit, eine Eingabe der Parameter der Temperaturregelung über die Benutzeroberfläche, eine automatische Eingabe der Parameter der Temperaturregelung über in der Uhr- und Kalenderfunktion dem Steuergerät hinterlegte Werte, und/oder eine Eingabe der Parameter der Temperaturregelung über in der Uhr- und Kalenderfunktion einzelner Regeleinheiten hinterlegte Werte vorgesehen ist. Es bestehen erfindungsgemäß mehrere Möglichkeiten der Eingabe von Sollwerten für die Temperaturregelung. Dadurch ist sichergestellt, dass zu jeder Zeit die vom Benutzer oder Bewohner gewünschte Temperatur eingestellt wird. Das Zusammenspiel zwischen automatischer Auswahl von Solltemperaturen und manuellen Bedienungsmöglichkeiten schafft jederzeit optimale Regelungsbedingungen. In dem Fall, dass die Bewohner zufrieden mit den eingestellten Temperaturen sind, läuft das Temperaturregelungssystem vollkommen automatisch und stellt optimale Temperaturen ohne jeglichen Aufwand für den Benutzer ein. Ist dieser Benutzer aber aus irgendeinem Grunde mit den anliegenden Temperaturen nicht einverstanden so kann er jederzeit und über verschiedene Eingabemöglichkeiten Einfluss auf die Temperaturregelung nehmen.

In einer vorteilhaften Ausgestaltung ist vorgesehen, dass eine Priorisierung der Eingaben vorgesehen ist. Unter Priorisierung ist hier zu verstehen, dass bestimmte Eingaben oder Eingabemethoden (manuell, Fernbedienung, hinterlegte Werte in der Uhr- und Kalenderfunktion,...) andere Eingaben oder Eingabemethoden überschreiben bzw. außer Kraft setzen können. In den meisten Fällen ist es sinnvoll, den manuellen Eingabemöglichkeiten direkt im entsprechenden Raum die höchste Priorität einzuräumen. Dadurch können durch manuelle Eingaben alle anderen Eingabemöglichkeiten außer Kraft gesetzt werden. Dies entspricht dem Wunsch der meisten Menschen, die ihr aktuelles Temperaturempfinden in der Wichtigkeit auch deutlich vor hinterlegten Werten in einem automatischen Regelungssystem sehen. Erfindungsgemäß ist aber selbstverständlich auch eine andere Priorisierung denkbar. So kann es in kritischen Labor- oder Lagerräumen sinnvoll sein, die automatische Vorgabe der Sollwerte in der Priorität vor die manuellen Eingabemöglichkeiten zusetzen, da im Falle einer manuellen Fehlbedienung ein größerer Schaden drohen könnte.

Bei einer bevorzugten Ausgestaltung des Vorschlags ist vorgesehen, dass zwei oder mehr kommunizierende Steuergeräte vorgesehen sind. Das Vorsehen von zwei Steuergeräten verbessert ein erfindungsgemäßes Temperaturregelungssystem dadurch, dass bei Ausfall oder Störung eines Steuergerätes das andere Steuergerät alle erforderlichen Aufgaben zur Temperaturregelung übernehmen kann.

Des Weiteren ist vorgesehen, dass die Regeleinheit als Thermostateinheit ausgebildet ist und/oder wenigstens einen Temperatur-, Licht- und/oder Bewegungssensor aufweist. Besonders vorteilhaft an dieser möglichen Ausführungsform ist, dass eine als Thermostateinheit ausgebildete Regeleinheit durch Sensoren weitere Möglichkeiten einer automatischen Temperaturregelung bietet. Beispielsweise kann über einen Bewegungssensor ermittelt werden, ob sich Personen im Raum befinden. Ist dies nicht der Fall kann die Temperatur automatisch reduziert werden um Kosten einzusparen. Darüber hinaus bietet ein Lichtsensor die Möglichkeit festzustellen, ob die Raumbeleuchtung eingeschaltet ist, was wiederum ein Hinweis auf die Benutzung des entsprechenden Raumes ist. Einer oder mehrere Sensoren an einer Regeleinheit verbessern somit die automatische Daten- oder Informationsermittlung eines erfindungsgemäßen Temperaturregelungssystems.

Geschickter Weise ist vorgesehen, dass mit der Regeleinheit eine Erfassung von Ist-Werten für Temperatur, Licht und/oder Bewegung vorgesehen ist. Wie bereits beschrieben können Informationen zu Temperatur, Licht und Bewegung im Raum geschickt dazu verwendet werden zu ermitteln, ob sich Personen in diesem Raum aufhalten. Diese Anwesenheitsinformation schafft dann wiederum Vorteile bei der optimalen Auswahl einer Solltemperatur für die Temperaturregelung.

Des Weiteren ist günstiger Weise vorgesehen, dass eine Weitergabe von durch die Regeleinheit erfassten Ist-Werte an das Steuergerät vorgesehen ist, insbesondere wobei durch das Steuergerät eine Temperaturregelung nach Abgleich der Ist-Werte mit im Steuergerät hinterlegten Soll-Werten vorgesehen ist. In dieser Ausführungsform der Erfindung erfolgt die eigentliche Regelung der Temperatur im Steuergerät. Die einzelnen Regeleinheiten stellen dazu jeweils die aktuellen Ist-Werte aus den jeweiligen Räumen zur Verfügung und übermitteln diese Daten an das Steuergerät. Das Steuergerät ermittelt dann den Unterschied zwischen Ist- und Sollwerten und leitet aus diesem unterschied Stellgrößen für die jeweiligen Wärmequellen ab. Eine Regelung über das Steuergerät bietet den Vorteil, dass gleichzeitig alle Ist-Werte aus allen Räumen vorliegen und auch deren Gesamtheit in den Regelungsalgorithmus einfließen kann. So wird vermieden, dass benachbarte Wärmequellen stark ins gegensätzlich geregelt werden.

Erfindungsgemäß ist vorgesehen, dass an einer oder mehreren Regeleinheiten ein Temperatursensor zur Messung der Vorlauftemperatur der Wärmequelle und ein Temperatursensor zur Messung der Rücklauftemperatur der Wärmequelle vorgesehen sind und die Regeleinheit aus den Messwerten dieser Temperatursensoren in Kombination mit dem Messwert des Temperaturfühlers, der die Raumtemperatur misst, und einer Zeitinformation, die von der Uhr- und Kalenderfunktion bereitgestellt wird, die Wärmemenge berechnet, die an der Wärmequelle, deren Temperatur die Regeleinheit regelt, umgesetzt wird. In dieser Ausführungsform sind zwei weitere Temperatursensoren vorgesehen, die die Temperatur des Heizmediums am Vorlauf sowie am Rücklauf der Wärmequelle messen, welche von der Regeleinheit geregelt wird. Die Differenz zwischen Vorlauf- und Rücklauftemperatur sagt aus, in welchem Maß das Heizmedium beim Durchlaufen der Wärmequelle abgekühlt. In Kombination mit der Information des in der Regeleinheit verbauten Temperaturfühlers, welcher die aktuelle Raumtemperatur misst, ist eine Berechnung der an der Wärmequelle umgesetzten Wärmemenge gemäß der europäischen Norm EN 834 möglich. Zusätzlich zu den beiden Sensoren für die Vor- und Rücklauftemperatur des Heizmediums kann auch ein Sensor zur Messung des Volumenstromes durch die Wärmequelle an einer Regeleinheit vorgesehen sein. Ein solcher Sensor kann beispielsweise durch ein Flügelrad oder ein Venturi-Rohr gebildet werden.

Besonders vorteilhaft an dieser Ausführungsform ist die Funktionsvereinigung zweier Geräte innerhalb einer Regeleinheit: zum einen regelt die Regeleinheit komfortabel und automatisch die Raumtemperatur. Zum anderen ermittelt die Regeleinheit gleichzeitig die umgesetzte Wärmemenge, die für die Berechnung der anfallenden Heizkosten benötigt wird. Aktuell wird diese Berechnung der Wärmemenge meist von separaten Geräten durchgeführt, was einen erhöhten Aufwand, auch in finanzieller Hinsicht, bedeutet. Mit einer Integration einer Möglichkeit zur Wärmemengenmessung in einer Regeleinheit kann ein zusätzliches Gerät zur Feststellung der verbrauchten Wärmemenge eingespart werden. Eine Integration der Wärmemengenmessung in die Regeleinheit hat weitere Vorteile. Separate Geräte zur Messung der Wärmemenge haben oft das Problem, dass sie bei niedrigen Vorlauftemperaturen oder bei geringen Differenzen zwischen Vor- und Nachlauftemperatur nicht erkennen können, ob die entsprechende Wärmequelle überhaupt von Heizmedium durchströmt wird oder nicht. Es kann daher bei separaten Geräten zur Messung der Wärmemenge vorkommen, dass eine umgesetzte Wärmemenge berechnet wird, obwohl das Ventil der Wärmequelle komplett geschlossen ist und diese gar nicht von Heizmedium durchströmt wird. Eine mit der Funktion zur Wärmemengenmessung versehene Regeleinheit eines erfindungsgemäßen Temperaturregelungssystems erkennt die Ventilstellung des Heizkörpers und hat somit jederzeit eine verlässliche Information zur Verfügung, ob der Heizkörper von Heizmedium durchströmt wird oder nicht.

Bei einer bevorzugten Ausgestaltung des Vorschlags ist vorgesehen, dass der Temperatursensor zur Messung der Vorlauftemperatur in den Anschluss der Regeleinheit integriert ist oder sich außerhalb der Regeleinheit befindet und der Temperatursensor zur Messung der Rücklauftemperatur sich außerhalb der Regeleinheit befindet und der mindestens eine, sich außerhalb der Regeleinheit befindliche Sensor über einen Sensoranschluss mit der Regeleinheit verbunden ist und dieser Sensoranschluss als Kabelverbindung oder Drahtlosverbindung ausgeführt ist. In dieser Ausführungsform der Erfindung ist ein Sensor zur Messung der Vorlauftemperatur an der Regeleinheit oder innerhalb dieser vorgesehen. Ein weiterer Sensor befindet sich außerhalb der Regeleinheit und ist am Rücklauf der Wärmequelle zur Messung der Rücklauftemperatur angebracht. Dieser Sensor zur Messung der Rücklauftemperatur ist über einen Sensoranschluss mit der Regeleinheit zur Informationsübertragung verbunden. Der Sensoranschluss kann dabei als Kabelverbindung oder aber auch als Funkverbindung ausgebildet sein.

Erfindungsgemäß ist vorgesehen, dass ein Kontaktsensor in oder an der Regeleinheit vorgesehen ist, der ermittelt, ob die Regeleinheit an einem Ventil angeschlossen ist. In dieser Ausführung der Erfindung ist ein Kontaktsensor vorgesehen, der erkennen kann, ob eine Regeleinheit tatsächlich an einem Ventil einer Wärmequelle angeschlossen ist. Bei einer Verwendung der Regeleinheit als Wärmemengenmesser, wie es weiter oben beschrieben wurde, wäre es möglich, die Regeleinheit von der Wärmequelle zu entfernen um die umgesetzte Wärmemenge absichtlich nicht zu erfassen. Im Fall der Abrechnung der Heizkosten anhand der umgesetzten und von der Regeleinheit ermittelten Wärmemenge könnten so die anfallenden Heizkosten manipuliert werden. Um eine derartige Manipulation der Heizkosten entgegenzuwirken, ist der Kontaktsensor in der Regeleinheit vorgesehen. Für den Fall, dass dieser Kontaktsensor erkennt, dass er nicht an einem Ventil einer Wärmequelle angeschlossen ist, wird für die Berechnung der umgesetzten Wärmemenge der maximal mögliche Volumenstrom angenommen. Die Zusammenhänge zwischen den Signalen des Kontaktsensors und der daraus abzuleitenden Annahmen und Aktionen sind als Programm im Speicher der Regeleinheit oder des Steuergerätes des Temperaturregelungssystems hinterlegt. Somit wird bei einer absichtlichen Demontage einer Regeleinheit von der Wärmequelle nicht gar kein Volumenstrom und damit gar keine Wärmemenge erfasst sondern es wird der maximal mögliche Volumenstrom und damit die maximal mögliche Wärmemenge von Regeleinheit erfasst und aufgezeichnet. Ein Nutzer, der Regeleinheit von der Wärmequelle demontiert um dadurch Heizkosten einzusparen erreicht damit genau das Gegenteil: durch die Demontage der Regeleinheit wird automatisch die maximal mögliche Wärmemenge aufgezeichnet, was zu keiner Einsparung bei den Heizkosten führt sondern im Gegenteil zu höheren Heizkosten als im Normalbetrieb führen dürfte. Das Vorsehen eines Kontaktsensors, der erkennt, ob die Regeleinheit an einer Wärmequelle angeschlossen ist, verhindert somit effektiv und einfach eine Manipulation der Heizkostenabrechnung durch Bewohner der beheizten Räume.

Des Weiteren ist günstiger Weise vorgesehen, dass die Regeleinheit Daten zur Wärmemenge, die an der Wärmequelle umgesetzt wird, welche von der Regeleinheit geregelt wird, an das Steuergerät oder direkt an das Internet übermittelt, wobei diese Daten durch das Steuergerät und/oder durch einen externen Dienstleister, der über eine Datenverbindung, insbesondere das Internet, mit dem Steuergerät oder direkt mit der Regeleinheit verbunden ist, ausgewertet werden. In dieser Ausführung des Temperaturregelungssystems wird die Wärmemenge, die an einer Wärmequelle umgesetzt wird, an dem die Regeleinheit befestigt ist nicht nur gespeichert, sondern auch über eine Datenverbindung an andere Geräte übermittelt. Diese Übermittlung erfolgt dabei zunächst von der Regeleinheit zum Steuergerät. Bei einer Übermittlung der umgesetzten Wärmemenge zum Steuergerät besteht dort die Möglichkeit, die Wärmemengen mehrerer Wärmequellen miteinander zu vergleichen oder zu addieren. Somit kann in komfortabler Weise die Umsetzung von Wärme und damit der Energieverbrauch innerhalb einer Wohneinheit oder eines Hauses ausgewertet werden. Darüber hinaus ist es möglich die erfassten Daten zu den Wärmemengen über eine Datenverbindung direkt einem externen Dienstleister zur Verfügung zu stellen, der dann den Energieverbrauch ermittelt und eine Rechnung für die fälligen Heizkosten erstellt. Die Datenverbindung zwischen Regeleinheit bzw. dem Steuergerät auf der einen Seite und dem externen Dienstleister auf der anderen Seite kann dabei über verschiedene Datenverbindungen erfolgen. Derartige Datenverbindungen können beispielsweise das Internet oder auch direkte Netzwerkanbindungen wie LAN, WLAN, Ethernet oder Ähnliches sein. Eine direkte Verbindung der Regeleinheit, welche auch die umgesetzte Wärmemenge erfasst, mit einem externen Dienstleister erspart das Ablesen der umgesetzten Wärmemenge vor Ort. Dieses Einsparen eines Besuchs eines Mitarbeiters, der in allen Wohneinheiten die umgesetzte Wärmemenge abliest, erspart dem Dienstleister Kosten für den im Außendienst tätigen Mitarbeiter und beseitigt gleichzeitig unangenehme Termine für die Bewohner, die durch die erfindungsgemäße Lösung nicht zu den vereinbarten Ablesezeiten durch einen Mitarbeiter des Dienstleisters zuhause sein und den Mitarbeiter in ihre Wohnung lassen müssen.

Des Weiteren ist günstiger Weise vorgesehen, dass ein Fernbedienungsgerät vorgesehen ist, welches die Fernbedienung einiger oder aller Regeleinheiten und des Steuergerätes ermöglicht, wobei die Fernbedienung mittels des Fernbedienungsgeräts unabhängig von dem Router und dem Internet ist. In dieser Ausführungsform eines erfindungsgemäßen Temperaturregelungssystems ist ein Fernbedienungsgerät vorgesehen, welches das Vornehmen von Einstellungen an den Regeleinheiten und am Steuergerät ermöglicht. Derartige Einstellungen können beispielsweise das Anpassen von Solltemperaturen oder der Wechsel von unterschiedlichen Temperatur- und Heizprofilen sein. Besonders günstig hat sich dabei eine Funkverbindung zwischen dem Fernbedienungsgerät und den Regeleinheiten bzw. dem Steuergerät herausgestellt. Dadurch, dass ein oder mehrere Fernbedienungsgeräte unabhängig von einem Router oder dem Internet funktionieren, ist eine Fernbedienbarkeit der einzelnen Einheiten auch ohne Internetverbindung möglich und sichergestellt. Die Fernbedienbarkeit des Temperaturregelungssystems ist somit unabhängig von Einflüssen von außerhalb des Gebäudes.

Des Weiteren ist günstiger Weise vorgesehen, dass zusätzlich zu der mindestens einen Regeleinheit mindestens ein Wasserverbrauchszähler vorgesehen ist, der Daten zur verbrauchten Wassermenge, insbesondere drahtlos, an das Steuergerät übermittelt und das Steuergerät die übermittelten Daten weiteren Anwendungen zur Verfügung stellt. In dieser Ausführungsform ist zusätzlich zu den Regeleinheiten mindestens ein Wasserverbrauchszähler vorgesehen. Dieser Wasserverbrauchszähler misst die verbrauchte bzw. durchgeflossene Menge an Warm- und/oder Kaltwasser. Das Zählwerk des Wasserverbrauchszählers kann dabei mechanisch oder elektronisch ausgeführt sein, wobei unterschiedlichste physikalische Messeprinzipien zum Einsatz kommen können. Die vom Zählwerk erfasste Wassermenge wird dann drahtlos vom Wasserverbrauchszähler zum Steuergerät übermittelt. Vom Steuergerät aus werden die übermittelten Daten dann anderen Anwendungen zur Verfügung gestellt. Dadurch, dass die Daten zunächst an das Steuergerät übermittelt werden, bestehen anschließend sehr viele verschiedene Möglichkeiten zur komfortablen Weiterverarbeitung der Daten. Beispielsweise können die verbrauchten Mengen auf verschiedenen Benutzeroberflächen angezeigt werden. Weiterhin ist es möglich die verbrauchten Mengen, beispielsweise über eine Internetverbindung, Dienstleistern zur Verfügung zu stellen, die basierend auf diesen Daten eine Kostenabrechnung für das verbrauchte Wasser erstellen. Dadurch sind Hausbesuche, bei denen ein Dienstleister die Zähler direkt in der Wohnung abliest nicht mehr nötig. Vorgeschlagen wird ebenfalls die Verwendung eines Temperaturregelungssystems nach einer der bereits beschriebenen Ausführungsformen eines Temperaturregelungssystems zur Temperaturregelung in einem Gebäude, wobei das Gebäude als Altbau, Neubau oder Kombination aus Alt- und Neubau ausgebildet ist und wenigstens ein Steuergerät und eine Kombination verschiedener oder gleicher wie insbesondere in den vorher beschriebenen Ausführungsformen definierter Regeleinheiten aufweist. Besonders vorteilhaft an der Erfindung ist eine Verwendung des Temperaturregelungssystems in den verschiedensten Arten von Gebäuden. Aufgrund der großen Vielfalt an möglichen, im System verwendbaren Regeleinheiten kann ein solches Temperaturregelungssystem in Gebäude nahezu jeden Baujahres angepasst und verwendet werden und ermöglicht somit auch eine Verwendung für die einfache Renovierung von Altbauten als auch die Erstausstattung von Neubauten. Die verschiedenen Arten der zur Verfügung stehenden Regeleinheiten machen dabei die Regelung und Nutzung von Heizkörpern, Fußbodenheizungen, Zentralheizungen, Warmwasserbereitern, Ölöfen, Elektroheizern und vielem mehr möglich.

Weiterhin wird die Aufgabe der Erfindung durch ein Gebäude mit einem Temperaturregelungssystem nach einer der bereits beschriebenen Ausführungsformen gelöst, wobei das Gebäude als Altbau oder Neubau ausgebildet ist oder Altbau- und Neubauanteile aufweist. In dieser Ausführungsform der Erfindung gehört das Temperaturregelungssystem bereits zu dem Gebäude in dem es eingebaut ist. Zur Erfindung gehörende Gebäude können dabei aus unterschiedlichsten Baujahren stammen, wobei selbstverständlich auch Gebäude zu zählen sind die nach und nach zu verschiedenen Zeiten errichtet wurden.

In einer vorteilhaften Ausgestaltung ist vorgesehen, dass in verschiedenen Bauanteilen des Gebäudes jeweils unterschiedliche Regeleinheiten vorgesehen sind und dass ein Steuergerät vorgesehen ist, das für eine Kommunikation mit sämtlichen Regeleinheiten ausgebildet ist. Wenn ein Gebäude verschiedene Bauanteile aus verschiedenen Baujahren aufweist, sind darin meist auch verschiedene Wärmequellen vorhanden. Für diese verschiedenen Wärmequellen stehen jeweils geeignete verschiedene Regeleinheiten zur Verfügung. Diese verschiedenen Regeleinheiten kommunizieren dann alle mit dem Steuergerät, was eine einfache und dennoch komplette Erschließung des gesamten Gebäudes mit einem modernen Temperaturregelung System zur Folge hat.

Des Weiteren ist vorgesehen, dass ein Steuergerät für die gebäudeweite Temperaturregelung in einem Gebäude vorgesehen ist. Der Einsatz eines einzigen Steuergerätes in einem erfindungsgemäßen Gebäude hat den Vorteil, dass Installation und Wartung des eingebauten Temperaturregelungssystems besonders einfach sind. Selbstverständlich ist es auch möglich, ein erfindungsgemäßes Gebäude mit zwei oder mehreren Steuergeräte in einem Gebäude einzusetzen.

In der Zeichnung ist die Erfindung insbesondere in einem Ausführungsbeispiel schematisch dargestellt. Es zeigen:
- Fig. 1: eine schematische Darstellung eines Temperaturregelungssystems,
- Fig. 2: eine teilweise geschnittene Seitenansicht eines Heizkörpers mit einer Ausführungsform einer Regeleinheit mit Wärmemengenmesser.

Die in der gesamten Beschreibung enthaltenen Offenbarungen ist sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

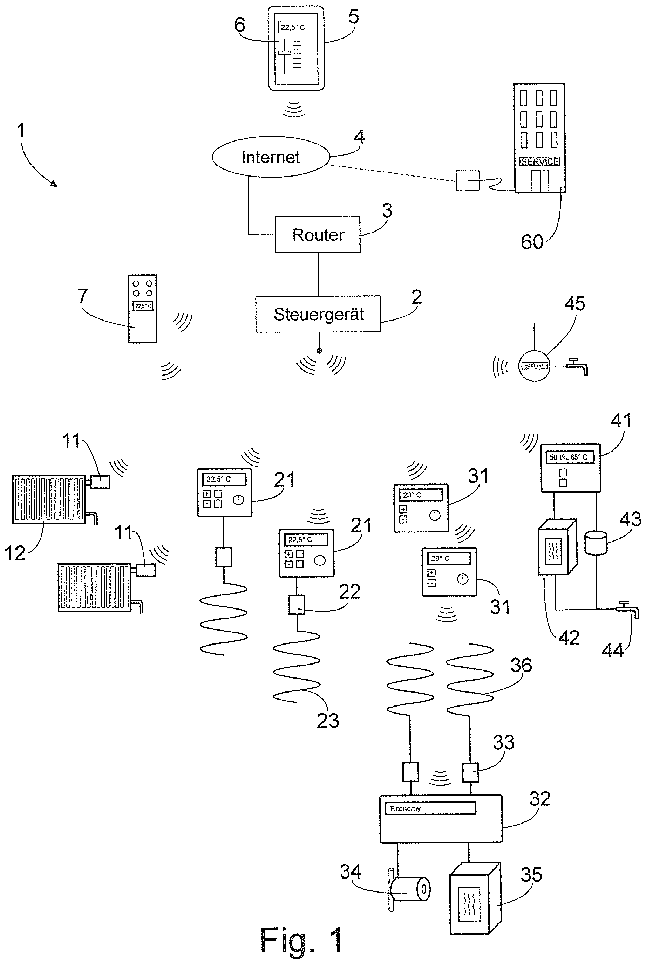

Fig. 1 zeigt eine schematische Darstellung einer Ausführungsform eines erfindungsgemäßen Temperaturregelungssystems 1. Dieses Temperaturregelungssystem 1 besteht aus verschiedenen Komponenten. Ein zentrales Element des Temperaturregelungssystems 1 ist das Steuergerät 2. Das Steuergerät 2 kommuniziert mit allen Varianten der weiter unten dargestellten Regeleinheiten 11, 21, 31, 32, 41. Zur Darstellung dieser Kommunikation sind jeweils symbolische Funkwellen in der Nähe der Komponenten zu sehen. Anstelle der angedeuteten Funkverbindung sind selbstverständlich auch andere Verbindungen wie beispielsweise Kabelanschlüsse möglich. Als eine erste mögliche Variante eine Regeleinheit ist das Heizkörperthermostat 11 in Fig. 1 unten links abgebildet. Dieses Heizkörperthermostat 11 ist im dargestellten Fall an der Stelle an einem Radiator-Heizkörper 12 angebracht, an der sich auch ein handelsübliches, mechanisches Thermostat befinden könnte. Eine Nachrüstung bzw. ein Ersatz veralteter Technologien durch eine Regeleinheit 11 gemäß dem erfindungsgemäßen Temperaturregelungssystems 1 gestaltet sich somit sehr einfach. Die dargestellten Funkwellen neben der Regeleinheit 11 symbolisieren hier die Kommunikation mit dem Steuergerät 2, neben dem ebenfalls Funkwellen dargestellt sind. Unterhalb des ersten Radiator-Heizkörpers 12 ist ein zweiter solcher Heizkörper ebenfalls mit einem Heizkörperthermostat 11 dargestellt. Dies zeigt, dass auch mehrere Regeleinheiten gleicher Bauart in einem erfindungsgemäßen Temperaturregelungssystem 1 eingesetzt werden können.

In Fig. 1 rechts neben dem Heizkörperthermostat 11 ist eine weitere mögliche Ausführungsform einer Regeleinheit, ein Direktregler 21 für Fußbodenheizungen zu sehen. Auch dieser Direktregler 21 kommuniziert hier über schematisch dargestellte Funkwellen mit dem Steuergerät 2. Direkt angeschlossen an dem Direktregler 21 ist hier ein Stellmotor 22 für ein Ventil. Dieses Ventil steuert den Durchfluss von Heizmedium durch eine Heizschlaufe 23 einer Fußbodenheizung. Sowohl das Ventil mit dem Stellmotor 22, als auch die zu steuernde Heizschlaufen 23 befinden sich hier im gleichen Raum wie der Direktregler 21. Die Ansteuerung des Stellmotors 22 erfolgt hier über eine dargestellte Kabelverbindung. Direktregler 21 dieser Bauart können als direkter Ersatz für Regler älterer Technologie verbaut und an die Stellmotoren 22 angeschlossen werden. Es ist aber auch möglich, die Kommunikation zwischen dem Direktregler 21 und dem Stellmotor 22 über eine drahtlose Verbindung erfolgen zu lassen. Neben dem ersten Direktregler 21 mit angeschlossenem Stellmotor 22 ist eine zweite derartige Regeleinheit zu sehen. Dies zeigt, dass auch der Einsatz mehrerer Direktregler 21, auch in Kombination mit anderen Regeleinheiten wie den Heizkörperthermostaten 11 in dem Temperaturregelungssystem 1 möglich ist.

Der neben dem Direktregler 21 dargestellte Funkregler 31 regelt hier ebenfalls den Durchfluss von Heizmedium durch die Heizschlangen 36 einer Fußbodenheizung. Im Unterschied zum Direktregler 21 kommuniziert der Funkregler zur Regelung der Fußbodenheizung zunächst mit einer Funkleiste 32. Diese Funkleiste 32 beeinflusst dann die Stellantriebe 33 von Ventilen, die dann wiederum den Durchfluss des Heizmediums durch die Heizschlangen 36 der Fußbodenheizung steuern. Der Funkregler 31 befindet sich somit im selben Raum wie die Heizschlangen 36. Die Ventile zur Regelung des Durchfluss ist durch diese Heizschlangen 36 befinden sich allerdings an entfernter Stelle und werden an dieser entfernten Stelle nicht vom Funkregler 31 direkt sondern von einer Funkleiste 32 angesteuert. Dieser Umweg über die Funkleiste 32 hat den Hintergrund, dass bei älteren Gebäuden die Ventile für die verschiedenen Heizschlangen der Fußbodenheizung meist in zentraler Stelle im Keller eingebaut wurden. Somit besteht aus diesem Grund eine räumliche Trennung zwischen den Ventilen und dem Ort, wo die Fußbodenheizung wirkt, nämlich im entsprechenden Raum. Die Funkleiste 32 nimmt weiterhin Einfluss auf die Umwälzpumpe 34, welche das Heizmedium durch die Heizschlangen 36 pumpt und somit ebenfalls Einfluss auf die Wärmeabgabe Fußbodenheizung hat. Weiterhin steuert die Funkleiste 32 den Kessel 35, indem das Heizmedium für die Fußbodenheizung erwärmt wird.

Alternativ ist es auch möglich, dass die Funkleiste 32 selbst als Regeleinheit ausgebildet ist und direkt mit dem Steuergerät 2 kommuniziert. In diesem Fall empfängt die Funkleiste die Sollwerte für die Temperaturregelung vom Steuergerät 2, ohne einen zwischengeschalteten Funkregler 31. Die eigentliche Regelung, der Vergleich von Ist- zu Sollwert und die Ableitung einer geeigneten Stellgröße übernimmt in diesem Fall die als Regeleinheit ausgebildete Funkleiste.

Eine derartige, als Regeleinheit ausgebildete Funkleiste 32 kann dann, wie in Fig. 1 dargestellt, verschiedene Wärmequellen oder Komponenten des Temperaturregelungssystems 1 regeln. Im dargestellten Fall werden drei Stellantriebe 33, eine Umwälzpumpe 34 und ein Kessel 35 von der Funkleiste geregelt. Es ist aber ebenfalls möglich, dass die Funkleiste 32 ausschließlich einen Kessel 35 regelt. Ein derartiger Kessel 35 kann auch als Therme, Etagenheizung, oder Ähnliches ausgebildet sein.

Ganz auf der rechten Seite in Fig. 1 ist eine als Brauchwasserregler 41 ausgeführte Regeleinheit dargestellt. Auch dieser Brauchwasserregler 41 kommuniziert mit dem Steuergerät 2 über eine Funkverbindung. Der Brauchwasserregler 41 steht in Verbindung mit dem Warmwasserkessel 42 und dem Durchlauferhitzer 43. Der Brauchwasserregler 41 ermittelt die Ist-Temperaturen des Warmwassers, ermittelt den Unterschied zu Sollwerten, die entweder in seinem Speicher hinterlegt sind oder vom Steuergerät 2 zur Verfügung gestellt werden und regelt daraufhin bei Bedarf die für die Warmwassererzeugung vorgesehenen Wärmequellen, in Fig. 1 sind das der Warmwasserkessel 42 oder der Durchlauferhitzer 43. Der Brauchwasserregler 41 ist somit eine zum Temperaturregelungssystem 1 gehörende Regeleinheit, die nicht die Temperatur einer Raumheizung, sondern die Temperatur von als Brauchwasser vorgesehenem Warmwasser 44 regelt.

Oberhalb des Brauchwasserreglers 41 ist ein Wasserverbrauchszähler 45 zu sehen. Diese misst die Menge an Wasser, die durch eine Rohrleitung oder einen Brauchwasseranschluss fließt. Die gemessene Wassermenge wird dann an das Steuergerät 2 übermittelt. Die Datenübertragung kann sowohl drahtgebunden als auch drahtlos, wie dargestellt, erfolgen.

Oberhalb des Steuergerätes 2 ist ein Router 3 zu sehen. Dieser Router 3 ist in der dargestellten Ausführungsform der Erfindung über eine Kabelverbindung mit dem Steuergerät 2 verbunden. Selbstverständlich wäre an dieser Stelle aber auch eine Funkverbindung denkbar. Der Router 3 wiederum ist mit dem symbolisch dargestellten Internet 4 verbunden und ermöglicht somit die Kommunikation des Temperaturregelungssystems 1 mit weiten Teilen der Welt. Ebenfalls mit dem Internet 4 verbunden ist der Dienstleister 60, welcher beispielsweise die Berechnung der angefallen Heizkosten übernehmen kann. Die Kommunikation von Steuergerät 2 und dem externen Dienstleister erfolgt in der dargestellten Form über das Internet 4.

Ganz oben in Fig. 1 ist ein Smartphone dargestellt. Dieses Smartphone steht exemplarisch für verschiedene mögliche Dateneingabe- und/oder Ausgabegeräte 5. Das Dateneingabe- und/oder Ausgabegeräte 5 steht ebenfalls mit dem Internet 4 in Verbindung und ermöglicht so eine Fernbedienung des Steuergerätes 2 über das Internet 4 und den Router 3. Darüber hinaus wäre es auch möglich, dass das Dateneingabe- und/oder Ausgabegerät 5 über andere Kommunikationswege mit dem Steuergerät 2 in Verbindung steht. Derartige Kommunikationswege könnten beispielsweise Funkverbindungen sein, die direkt zwischen dem Dateneingabe- und/oder Ausgabegeräte 5 und dem Steuergerät 2 aufgebaut werden.

Das in Fig. 1 exemplarisch als Dateneingabe- und/oder Ausgabegerät 5 dargestellte Smartphone weist eine Benutzeroberfläche 6 auf. Diese Benutzeroberfläche 6 ist so gestaltet, dass die vom Steuergerät 2 abgerufenen Daten aus dem Temperaturregelungssystem 1 einfach und übersichtlich dargestellt werden können. Somit fällt es dem Benutzer leicht sich von außerhalb ein Bild vom Zustand in dem Gebäude zu machen, in dem das Temperaturregelungssystem 1 installiert ist. Darüber hinaus weist sie Benutzeroberfläche 6 Bedienelemente auf, mit denen Sollwerte, Heizprofile oder andere Daten am Steuergerät 2 abgeändert und beeinflusst werden können. Dadurch wird eine Anpassung der Temperaturen in dem mit dem Temperaturregelungssystem 1 ausgestatteten Gebäude von außerhalb in einer besonders benutzerfreundlichen Art und Weise ermöglicht. Die Benutzeroberfläche kann dabei mindestens zwei Zustände, nämlich einen ersten Zustand Manuell 61 und einen zweiten Zustand Auto 62 einnehmen. Das Dateneingabegerät bleibt nicht auf die hier dargestellte Variante als Smartphone beschränkt sondern kann auch als mobiler PC, PDA, Tablet,... ausgebildet sein.

Neben dem Steuergerät 2 und oberhalb der Regeleinheiten 11 und 21 ist ein Fernbedienungsgerät 7 dargestellt. Das Fernbedienungsgerät 7 ermöglicht eine Fernbedienung der Regeleinheiten 11, 21, 31, 32 und 41, sowie des Steuergerätes 2. Im dargestellten Fall kommuniziert das Fernbedienungsgerät 7 über eine Funkverbindung mit den anderen Geräten.

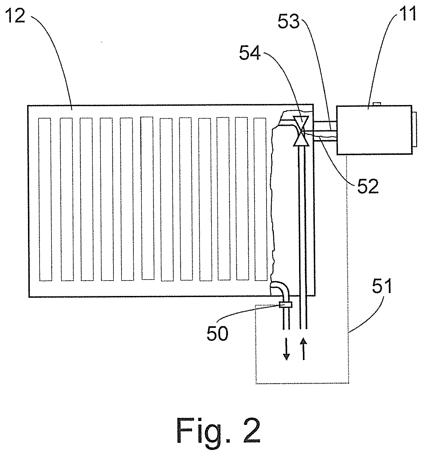

Fig. 2 zeigt eine teilweise geschnittene Seitenansicht eines Heizkörpers mit einer Ausführungsform einer Regeleinheit mit Wärmemengenmesser. Es ist ein Heizkörper zu sehen, an dem rechts oben eine erfindungsgemäße Regeleinheit 11 montiert ist. Die Regeleinheit 11 regelt die Heizleistung die als Heizkörper 12 ausgeführte Wärmequelle und damit die Raumtemperatur. Zur Steuerung der Durchflussmenge an Heizmedium durch den Heizkörper 12 greift die Regeleinheit 11 auf das Ventil 54 zu. Zur Erkennung, ob die Regeleinheit 11 tatsächlich an einem Ventil 54 angeschlossen ist, ist der Kontaktsensor 53 vorgesehen. Wird die Regeleinheit 11 vom Heizkörper demontiert, so zeigt dies der Kontaktsensor 53 an. Neben dem Kontaktsensor 53 ist im Anschluss der Regeleinheit 11 ein Temperatursensor 52 vorgesehen, der die Temperatur des Heizmediums im Vorlauf, d.h. auf der Seite, auf der das Heizmedium, geregelt durch die Regeleinheit 11 in den Heizkörper einströmt, misst. Diese Messung der Vorlauftemperatur wird dann später für die Bestimmung der umgesetzten Wärmemenge am Heizkörper benötigt. Am Rücklauf des Heizkörpers, im unteren Bereich von Fig. 2 dargestellt, ist ein weiterer Temperatursensor 50 zur Messung der Temperatur des Nachlaufs vorgesehen unter Nachlauf ist das Heizmedium zu verstehen, welches nach der Abgabe der Wärme im Heizkörper wieder aus dem Heizkörper herausfließt. Auch die Temperatur des Nachlaufs geht als Eingangsinformation in die Berechnung der am Heizkörper umgesetzten Wärmemenge ein.

Der Temperatursensor 50 befindet sich außerhalb der Regeleinheit 11. Der Temperatursensor 50 zur Messung der Nachlauftemperatur ist deshalb durch einen Sensoranschluss 51 mit der Regeleinheit 11 verbunden. Dieser Sensoranschluss 51 kann dabei, wie im in Fig. 2 dargestellten Fall, durch eine Kabelverbindung gebildet werden. Allerdings ist es auch möglich, den Sensoranschluss 51 durch eine Funkverbindung oder Ähnliches zu realisieren. Die Regeleinheit 11 berechnet aus der Vorlauftemperatur, ermittelt durch den Temperatursensor 52, der Nachlauftemperatur, ermittelt durch den Temperatursensor 50 und der Raumtemperatur, ermittelt durch den in der Regeleinheit 11 angebrachten Temperaturfühler die am Heizkörper umgesetzte Wärmemenge, welche von der Regeleinheit 11 aufgezeichnet und abgespeichert wird.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

## Patentansprüche

1. Temperaturregelungssystem umfassend ein Steuergerät (2) und eine oder mehrere Regeleinheiten (11, 21, 31, 32, 41), wobei die Regeleinheiten (11, 21, 31, 32, 41) gleich oder verschiedenartig ausgebildet sind und gleiche oder Kombinationen von gleich oder verschiedenartig ausgebildeten Regeleinheiten (11, 21, 31, 32, 41) über das Steuergerät (2) wahlweise ansteuerbar sind und die Regeleinheiten (11) mittelbar und/oder unmittelbar wenigstens eine Wärmequelle (12) regeln, die Regeleinheit (11, 21, 31, 32, 41) wenigstens Temperaturfühler zur Messung der Raumtemperatur, sowie einen, Licht- und/oder Bewegungssensor aufweist, **dadurch gekennzeichnet, dass** an einer oder mehreren Regeleinheiten (11, 21, 31, 32) ein Temperatursensor (52) zur Messung der Vorlauftemperatur der Wärmequelle und ein Temperatursensor (50) zur Messung der Rücklauftemperatur der Wärmequelle vorgesehen sind und die Regeleinheit aus den Messwerten dieser Temperatursensoren in Kombination mit dem Messwert des Temperaturfühlers, der die Raumtemperatur misst, und einer Zeitinformation, die von einer Uhr- und Kalenderfunktion bereitgestellt wird, die Wärmemenge berechnet, die an der Wärmequelle, deren Temperatur die Regeleinheit regelt, umgesetzt wird und ein Kontaktsensor (53) in oder an der Regeleinheit (11, 21, 31, 32) vorgesehen ist, der ermittelt, ob die Regeleinheit (11, 21, 31, 32) an einem Ventil (54) angeschlossen ist.

2. Temperaturregelungssystem nach Anspruch 1, **dadurch gekennzeichnet, dass** die Regeleinheit (11, 21, 31, 32, 41) die Wärmeabgabe der Fußbodenheizung regelt, wobei die Regeleinheit (11, 21, 31, 32, 41) derart ausgebildet ist, dass sie jeweils mindestens einen Stellmotor (22) eines Ventils, welches den Warmwasserfluß durch Heizschlaufen (23) der Fußbodenheizung, bevorzugt dezentral jeweils über eine Kabel- und/oder Funkverbindung regelt.

3. Temperaturregelungssystem nach einem der vorhergehenden Ansprüche **dadurch gekennzeichnet, dass** die Regeleinheit (11, 21, 31, 32, 41) über eine Funkverbindung mit dem insbesondere zentral angeordneten Steuergerät (2) und/oder einer Funkleiste (32) kommuniziert.

4. Temperaturregelungssystem nach einem der vorhergehenden Ansprüche, **dadurch gekennzeichnet, dass** die Regeleinheit (11, 21, 31, 32, 41) als Funkleiste (32) ausgebildet ist und wenigstens einen Stellantrieb (33) eines Ventils, das räumlich getrennt von der Funkleiste vorgesehen ist insbesondere über eine Funk- und/oder Kabelverbindung direkt ansteuert, und/oder über die Funkleiste (32) eine Umwälzpumpe (34) einer Fußbodenheizung und/oder über die Funkleiste (32) eine Kesseltemperatur eines zentralen Kessels (35) steuerbar ist.

5. Temperaturregelungssystem nach einem der vorhergehenden Ansprüche **dadurch gekennzeichnet, dass** die Regeleinheit (11, 21, 31, 32, 41) einem Warmwasserkessel (42) und/oder einem Durchlauferhitzer (43) zugeordnet ist, und die Regeleinheit (11, 21, 31, 32, 41) für die Regelung der Temperatur des als Brauchwasser vorgesehenen Warmwassers (44) vorgesehen ist.

6. Temperaturregelungssystem nach einem der vorhergehenden Ansprüche **dadurch gekennzeichnet, dass** mehrere, auch unterschiedlich ausgebildete, insbesondere wie zuvor definierte, Regeleinheiten (11, 21, 31, 32, 41) vorgesehen sind und die Regeleinheiten (11, 21, 31, 32, 41) unabhängig voneinander und/oder wahlweise direkt oder über das Steuergerät (2) ansteuerbar und/oder bedienbar sind.

7. Temperaturregelungssystem nach einem der vorhergehenden Ansprüche, **dadurch gekennzeichnet, dass** mindestens ein Dateneingabe- und/oder Ausgabegerät (5), insbesondere ein PC, Mobil-PC, Smartphone oder Tablet-PC vorgesehen ist, welches eine insbesondere graphische Benutzeroberfläche (6) zur Verfügung stellt, über die Parameter einer Temperaturregelung, wie beispielsweise die Solltemperatur in einzelnen oder mehreren Räumen eines Gebäudes, Temperatur- oder Heizprofile etc. einstellbar und veränderbar sind und das Dateneingabe- und/oder Ausgabegerät (5) für eine Übertragung der eingestellten Parameter via Datenfernübertragung, insbesondere über eine kabelgebundene Verbindung oder eine kabellose Internet-, Funk- oder NFC-Verbindung zu dem Steuergerät (2) ausgebildet ist.

8. Temperaturregelungssystem nach Anspruch 7, **dadurch gekennzeichnet, dass** mindestens zwei Zustände der Benutzeroberfläche (6) auswählbar sind und ein erster Zustand (Manuell 61) oder ein zweiter Zustand (Auto 62) vom Bediener der Benutzeroberfläche (6) bestimmt wird, wobei die Bedienoberfläche (6) im ersten Zustand (Manuell 61) zumindest einen Wechsel zwischen verschiedenen Temperatur- und Heizprofilen, eine Änderung von Solltemperaturen und Schaltzeiten und/oder das An- und Abschalten von Sensoren ermöglicht und wobei die Bedienoberfläche (6) im zweiten Zustand (Auto 62) zumindest eine Änderung von Solltemperaturen und Schaltzeiten und/oder das An- und Abschalten von Sensoren ermöglicht und über die Benutzeroberfläche (6) ein Zugriff auf das Temperaturregelungssystem jederzeit möglich ist.

9. Temperaturregelungssystem nach einem der vorhergehenden Ansprüche, **dadurch gekennzeichnet, dass** wahlweise eine
- manuelle Eingabe der Parameter der Temperaturregelung an der Regeleinheit (11, 21, 31, 32, 41),
- eine Eingabe der Parameter der Temperaturregelung über die Benutzeroberfläche (6),
- eine automatische Eingabe der Parameter der Temperaturregelung über in der Uhr- und Kalenderfunktion dem Steuergerät (2) hinterlegte Werte, und/oder
- eine Eingabe der Parameter der Temperaturregelung über in einer Uhr- und Kalenderfunktion einzelner Regeleinheiten (11, 21, 31, 32, 41) hinterlegte Werte
vorgesehen ist, wobei eine Priorisierung der Eingaben vorgesehen ist.

10. Temperaturregelungssystem nach einem der vorhergehenden Ansprüche, **dadurch gekennzeichnet, dass** zusätzlich zu der mindestens einen Regeleinheit (11, 21, 31, 32, 41) mindestens ein Wasserverbrauchszähler (45) vorgesehen ist, der Daten zur verbrauchten Wassermenge, insbesondere drahtlos, an das Steuergerät (2) übermittelt und das Steuergerät (2) die übermittelten Daten weiteren Anwendungen zur Verfügung stellt.

11. Temperaturregelungssystem nach einem der vorhergehenden Ansprüche, **dadurch gekennzeichnet, dass** der Temperatursensor (52) zur Messung der Vorlauftemperatur in den Anschluss der Regeleinheit (11, 21, 31, 32) integriert ist oder sich außerhalb der Regeleinheit (11, 21, 31, 32) befindet und der Temperatursensor (50) zur Messung der Rücklauftemperatur sich außerhalb der Regeleinheit (11, 21, 31, 32) befindet und der mindestens eine, sich außerhalb der Regeleinheit (11, 21, 31, 32) befindliche Sensor (50, 52) über einen Sensoranschluss (51) mit der Regeleinheit (11, 21, 31, 32) verbunden ist und dieser Sensoranschluss (51) als Kabelverbindung oder Drahtlosverbindung ausgeführt ist.

12. Gebäude mit einem Temperaturregelungssystem nach einem der Ansprüche 1 bis 11, **dadurch gekennzeichnet, dass** das Gebäude Altbau- und/oder Neubauanteile aufweist und in den Bauanteilen jeweils unterschiedliche Regeleinheiten (11, 21, 31, 32, 41) vorgesehen sind und das Steuergerät (2) für eine Kommunikation mit sämtlichen Regeleinheiten (11, 21, 31, 32, 41) ausgebildet ist.

13. Gebäude nach Anspruch 12, **dadurch gekennzeichnet, dass** ein Steuergerät (2) für die gebäudeweite oder gebäudeabschnitts- oder geschoßweise Temperaturregelung vorgesehen ist.

## Claims

1. Temperature control system comprising a master controller (2) and one or more controllers (11, 21, 31, 32, 41), the controllers (11, 21, 31, 32, 41) being of the same or different design and it being possible to optionally control the same or combinations of controllers (11, 21, 31, 32, 41) of the same or different design by means of the master controller (2) and the controllers (11) indirectly and/or directly controlling at least one heat source (12), the controller (11, 21, 31, 32, 41) having at least one temperature probe for measuring the room temperature, and a light sensor and/or motion sensor, **characterized in that** a temperature sensor (52) for measuring the flow temperature of the heat source and a temperature sensor (50) for measuring the return temperature of the heat source are provided on one or more controllers (11, 21, 31, 32) and the controller calculates the heat quantity on the basis of the measured values of said temperature sensors in combination with the measured value of the temperature probe, which measures the room temperature, and on the basis of time information which is provided by a clock and calendar function, which heat quantity is converted at the heat source, the temperature of which is controlled by the controller, and a contact sensor (53) is provided in or on the controller (11, 21, 31, 32) and detects whether the controller (11, 21, 31, 32) is connected to a valve (54).

2. Temperature control system according to claim 1, **characterized in that** the controller (11, 21, 31, 32, 41) controls the heat output of the underfloor heating system, the controller (11, 21, 31, 32, 41) being designed such that it controls in each case at least one servomotor (22) of a valve that controls the flow of hot water through heating loops (23) of the underfloor heating system, preferably locally via a cable connection and/or radio connection in each case.

3. Temperature control system according to either of the preceding claims, **characterized in that** the controller (11, 21, 31, 32, 41) communicates with the in particular centrally arranged master controller (2) and/or a radio strip (32) via a radio connection.

4. Temperature control system according to any of the preceding claims, **characterized in that** the controller (11, 21, 31, 32, 41) is designed as a radio strip (32) and directly controls, in particular via a radio connection and/or cable connection, at least one actuator (33) of a valve which is provided so as to be physically separated from the radio strip, and/or a circulating pump (34) of an underfloor heating system can be controlled by the radio strip (32) and/or a boiler temperature of a central boiler (35) can be controlled by the radio strip (32) .

5. Temperature control system according to any of the preceding claims, **characterized in that** the controller (11, 21, 31, 32, 41) is assigned to a hot-water boiler (42) and/or a continuous flow heater (43), and the controller (11, 21, 31, 32, 41) is provided for controlling the temperature of the hot water (44) provided as service water.

6. Temperature control system according to any of the preceding claims, **characterized in that** a plurality of controllers are provided (11, 21, 31, 32, 41) which are also differently designed, in particular are as defined above, and the controllers (11, 21, 31, 32, 41) can be controlled and/or operated independently of one another and/or optionally directly or by the master controller (2).

7. Temperature control system according to any of the preceding claims, **characterized in that** at least one data input and/or output device (5), in particular a PC, mobile PC, smartphone or tablet PC, is provided, which provides an in particular graphical user interface (6) by means of which temperature control parameters, such as the target temperature in individual or a plurality of rooms of a building, temperature or heating profiles, etc., can be set and adjusted, and the data input and/or output device (5) is designed for transmitting the set parameters via remote data transmission, in particular via a wired connection or a wireless Internet, radio or NFC connection, to the master controller (2).

8. Temperature control system according to claim 7, **characterized in that** at least two states of the user interface (6) can be selected and a first state (Manual 61) or a second state (Auto 62) is determined by the operator of the user interface (6), the user interface (6), in the first state (Manual 61), allowing at least one change between different temperature and heating profiles, an adjustment of target temperatures and switching times, and/or the switching on and off of sensors, and the user interface (6), in the second state (Auto 62), allowing at least one adjustment of target temperatures and switching times and/or the switching on and off of sensors, and it being possible to access the temperature control system at any time by means of the user interface (6).

9. Temperature control system according to any of the preceding claims, **characterized in that**
- a manual input of the temperature control parameters is optionally provided on the controller (11, 21, 31, 32, 41),
- an input of the temperature control parameters is optionally provided by means of the user interface (6),
- an automatic input of the temperature control parameters is optionally provided by means of values stored in the clock and calendar function of the master controller (2), and/or
- an input of the temperature control parameters is optionally provided by values stored in a clock and calendar function of individual controllers (11, 21, 31, 32, 41),
a prioritization of the inputs being provided.

10. Temperature control system according to any of the preceding claims, **characterized in that,** in addition to the at least one controller (11, 21, 31, 32, 41), at least one water consumption meter (45) is provided which transmits data regarding the quantity of water consumed, in particular wirelessly, to the master controller (2), and the master controller (2) makes the transmitted data available for further applications.

11. Temperature control system according to any of the preceding claims, **characterized in that** the temperature sensor (52) for measuring the flow temperature is integrated in the connection of the controller (11, 21, 31, 32) or is located outside the controller (11, 21, 31, 32) and the temperature sensor (50) for measuring the return temperature is located outside the controller (11, 21, 31, 32) and the at least one sensor (50, 52) located outside the controller (11, 21, 31, 32) is connected to the controller (11, 21, 31, 32) by means of a sensor connection (51), and said sensor connection (51) is designed as a cable connection or wireless connection.

12. Building having a temperature control system according to any of claims 1 to 11, **characterized in that** the building has old-building and/or new-building parts and different controllers (11, 21, 31, 32, 41) are provided in each of the parts, and the master controller (2) is designed to communicate with all the controllers (11, 21, 31, 32, 41).

13. Building according to claim 12, **characterized in that** a master controller (2) is provided for controlling the temperature of the entire building, portions of the building or stories of the building.

## Revendications

1. Système de régulation de température comprenant un régulateur (2) et une ou plusieurs unités de régulation (11, 21, 31, 32, 41), dans lequel les unités de régulation (11, 21, 31, 32, 41) sont conçues de manière identique ou différente, dans lequel des unités de régulation identiques ou des combinaisons d'unités de régulation (11, 21, 31, 32, 41) conçues de manière identique ou différente peuvent être commandées sélectivement par le régulateur (2), dans lequel les unités de régulation (11) régulent directement et/ou indirectement au moins une source de chaleur (12), et dans lequel l'unité de régulation (11, 21, 31, 32, 41) comporte au moins une sonde de température permettant de mesurer la température ambiante, ainsi qu'un capteur de lumière et/ou un capteur de mouvement, **caractérisé en ce qu**'un capteur de température (52) permettant de mesurer la température de départ de la source de chaleur et un capteur de température (50) permettant de mesurer la température de retour de la source de chaleur sont prévus sur une ou plusieurs unités de régulation (11, 21, 31, 32), en ce que l'unité de régulation calcule, à partir des valeurs mesurées de ces capteurs de température en combinaison avec la valeur mesurée de la sonde de température qui mesure la température ambiante et avec une information de temps fournie par une fonction d'horloge et de calendrier, la quantité de chaleur transférée à la source de chaleur dont la température est régulée par l'unité de régulation, et en ce qu'un capteur à contact (53) est prévu dans ou sur l'unité de régulation (11, 21, 31, 32), lequel détermine si l'unité de régulation (11, 21, 31, 32) est connectée à une vanne (54).

2. Système de régulation de température selon la revendication 1, **caractérisé en ce que** l'unité de régulation (11, 21, 31, 32, 41) régule le dégagement de chaleur du chauffage par le sol, l'unité de régulation (11, 21, 31, 32, 41) étant conçue de manière à actionner au moins un servomoteur (22) d'une vanne qui régule le débit d'eau chaude grâce à des boucles chauffantes (23) du chauffage par le sol, de préférence de manière décentralisée, respectivement par une connexion par câble et/ou radio.

3. Système de régulation de température selon l'une des revendications précédentes, **caractérisé en ce que** l'unité de régulation (11, 21, 31, 32, 41) communique via une connexion radio avec le régulateur (2) disposé en particulier de manière centrée et/ou avec une tranche de sécurité radio (32).

4. Système de régulation de température selon l'une des revendications précédentes, **caractérisé en ce que** l'unité de régulation (11, 21, 31, 32, 41) est conçue sous la forme d'une tranche de sécurité radio (32) et commande directement au moins un actionneur (33) d'une vanne prévue de manière physiquement séparée de la tranche de sécurité radio, notamment par l'intermédiaire d'une connexion radio et/ou par câble, et/ou en ce qu'une pompe de circulation (34) d'un chauffage par le sol et/ou une température d'une chaudière centrale (35) peuvent être commandées par la tranche de sécurité radio (32).

5. Système de régulation de température selon l'une des revendications précédentes, **caractérisé en ce que** l'unité de régulation (11, 21, 31, 32, 41) est associée à une bouilloire (42) et/ou à un chauffe-eau (43), et **en ce que** l'unité de régulation (11, 21, 31, 32, 41) est prévue pour réguler la température de l'eau chaude (44) fournie comme eau sanitaire.

6. Système de régulation de température selon l'une des revendications précédentes, **caractérisé en ce qu'**une pluralité d'unités de régulation (11, 21, 31, 32, 41) est prévue, lesquelles unités de régulation sont de conception différente et en particulier telles que définies ci-dessus, et **en ce que** les unités de régulation (11, 21, 31, 32, 41) peuvent être commandées et/ou actionnées indépendamment les unes des autres et/ou sélectivement directement ou par le régulateur (2).

7. Système de régulation de température selon l'une des revendications précédentes, **caractérisé en ce qu'**au moins un dispositif d'entrée et/ou de sortie de données (5), notamment un ordinateur personnel, un ordinateur portable, un téléphone intelligent ou un ordinateur de type tablette est prévu, lequel affiche une interface utilisateur (6), notamment graphique, permettant de régler et de modifier des paramètres d'une régulation de température, tels que la température de consigne dans une ou plusieurs pièces d'un bâtiment, des profils de température ou de chauffage, etc., et **en ce que** le dispositif d'entrée et/ou de sortie de données (5) est conçu pour transmettre au régulateur (2) des paramètres ajustés par télématique, notamment via une connexion filaire ou une connexion Internet, radio ou NFC sans fil.

8. Système de régulation de température selon la revendication 7, **caractérisé en ce qu'**au moins deux états de l'interface utilisateur (6) peuvent être sélectionnés, **en ce qu'**un premier état (manuel 61) ou un second état (auto 62) est défini par l'opérateur de l'interface utilisateur (6), l'interface utilisateur (6) dans le premier état (manuel 61) permettant au moins la transition entre différents profils de température et de chauffage, la modification de températures de consigne et de temps de commutation et/ou l'activation et la désactivation de capteurs, et l'interface utilisateur (6) dans le second état (auto 62) permettant au moins la modification de températures de consigne et de temps de commutation et/ou l'activation et la désactivation de capteurs, et **en ce que** l'accès au système de régulation de température est possible à tout moment via l'interface utilisateur (6).

9. Système de régulation de température selon l'une des revendications précédentes, **caractérisé en ce qu'**il est prévu sélectivement
- une entrée manuelle des paramètres de la régulation de température sur l'unité de régulation (11, 21, 31, 32, 41),
- une entrée des paramètres de la régulation de température via l'interface utilisateur (6),
- une entrée automatique des paramètres de la régulation de température concernant des valeurs mémorisées dans la fonction d'horloge et de calendrier du régulateur (2), et/ou
- une entrée des paramètres de la régulation de température concernant des valeurs mémorisées dans une fonction d'horloge et de calendrier des différentes unités de régulation (11, 21, 31, 32, 41),
une hiérarchisation des entrées étant prévue.

10. Système de régulation de température selon l'une des revendications précédentes, **caractérisé en ce qu'**il est prévu, outre l'au moins une unité de régulation (11, 21, 31, 32, 41), au moins un compteur de consommation d'eau (45) qui transmet au régulateur (2), notamment via une connexion sans fil, des données sur la quantité d'eau consommée, et **en ce que** le régulateur (2) met à disposition les données transmises pour des applications ultérieures.

11. Système de régulation de température selon l'une des revendications précédentes, **caractérisé en ce que** le capteur de température (52) permettant de mesurer la température de départ est intégré au raccordement de l'unité de régulation (11, 21, 31, 32) ou se trouve à l'extérieur de l'unité de régulation (11, 21, 31, 32), **en ce que** le capteur de température (50) permettant de mesurer la température de retour se trouve à l'extérieur de l'unité de régulation (11, 21, 31, 32), et **en ce que** l'au moins un capteur (50, 52) se trouvant à l'extérieur de l'unité de régulation (11, 21, 31, 32) est relié à l'unité de régulation (11, 21, 31, 32) par un raccord de capteur (51), ledit raccord de capteur (51) étant réalisé sous la forme d'une connexion filaire ou sans fil.

12. Bâtiment comportant un système de régulation de température selon l'une des revendications 1 à 11, **caractérisé en ce que** le bâtiment présente des éléments de construction anciens et/ou nouveaux, **en ce que** différentes unités de régulation (11, 21, 31, 32, 41) sont prévues dans chacun des éléments de construction, et **en ce que** le régulateur (2) est conçu pour communiquer avec l'ensemble des unités de régulation (11, 21, 31, 32, 41).

13. Bâtiment selon la revendication 12, **caractérisé en ce qu**'un régulateur (2) est prévu pour la régulation de température sur l'étendue du bâtiment, au niveau d'une section du bâtiment ou d'un étage.
